# EUROPEAN PATENT SPECIFICATION

(11) **EP 4 105 911 B1**
(45) Date of publication and mention of the grant of the patent: **17.12.2025**
(21) Application number: 21753982.4
(22) Date of filing: 07.01.2021
(51) Int. Cl.: G01C 21/20, B63B 49/00, B63B 79/40, G08G 3/02

(54) **SHIP NAVIGATION ASSISTANCE DEVICE AND SYSTEM, SHIP NAVIGATION ASSISTANCE METHOD, AND PROGRAM**
VORRICHTUNG UND SYSTEM ZUR UNTERSTÜTZUNG DER SCHIFFSNAVIGATION, VERFAHREN ZUR UNTERSTÜTZUNG DER SCHIFFSNAVIGATION UND PROGRAMM
DISPOSITIF ET SYSTÈME D'AIDE À LA NAVIGATION DE NAVIRE, PROCÉDÉ D'AIDE À LA NAVIGATION DE NAVIRE ET PROGRAMME

(30) Priority: 12.02.2020 JP 2020021621
(43) Date of publication of application: 21.12.2022
(73) Proprietor: FURUNO ELECTRIC CO., LTD., Nishinomiya-City, Hyogo 662-8580 (JP)
(72) Inventor: SATO, Sadao, Nishinomiya-City, Hyogo 6628580 (JP); YAMABAYASHI, Jun, Nishinomiya-City, Hyogo 6628580 (JP)
(74) Representative: Müller Hoffmann & Partner
(86) International application number: PCT/JP2021/000305
(87) International publication number: WO 2021/161690

(56) References cited:
- WO-A1-2019/088238
- CN-A- 109 059 928
- JP-A- 2000 182 199
- JP-A- 2003 162 800
- JP-A- 2008 037 252
- JP-A- 2008 037 252

## Description

### TECHNICAL FIELD

The present disclosure relates to a ship navigation support device, a ship navigation support system, a ship navigation support method, and a program.

### BACKGROUND ART

Patent Document 1 describes calculating, for each of a plurality of grids through which a trail of a specific ship passes, an angle of entry and an angle of exit of the trail, and based on a determination condition set for each of the plurality of grids, extracting a grid for which the angle of entry and the angle of exit suit the determination condition, and then, based on a relative distance with another ship corresponding to the position of the specific ship on the trail in the extracted grid, determining whether the specific ship performed an evasive action.

### [Reference Document of Conventional Art]

### [Patent Document]

[Patent Document 1] JP2017-182729A
CN 109 059 928 A is concerned with maritime information exchange, wherein routes are exchanged among vessels.
JP 2008 037252 A relates to a navigation communication assistance apparatus that improves the safety for collision prevention.

### DESCRIPTION OF THE DISCLOSURE

### [Problem to be Solved by the Disclosure]

Meanwhile, in the field of ships, even if an instruction is issued from the control to a ship, it is difficult from other ships to grasp whether the ship follows the instruction of the control.

The present disclosure is made in view of the problem described above, and the main purpose thereof is to provide a ship navigation support device and a ship navigation support system, a ship navigation support method, and a program, capable of easily grasping a movement of a ship.

### [Means for Solving the Problem]

In order to solve the problem, a ship navigation support device is provided according to claim 1 and a ship navigation support system according to claim 2.

Further, a ship navigation support method is provided according to claim 11 and a program according to claim 12.

### [Effect of the Disclosure]

According to the present disclosure, grasping a movement of a ship becomes easy.

### BRIEF DESCRIPTION OF DRAWINGS

Fig. 1 is a view illustrating one example of a ship navigation support system according to one embodiment.
Fig. 2 is a view illustrating one example of a recommended route providing device according to this embodiment.
Fig. 3 is a view illustrating one example of a ship ICT system mounted on a ship.
Fig. 4 is a view illustrating one example of a ship navigation support device according to this embodiment.
Fig. 5 is a view illustrating one example of a ship navigation support method according to this embodiment.
Fig. 6 is a view illustrating one example of a screen indication.
Fig. 7 is a view illustrating one example of the screen indication.
Fig. 8 is a view illustrating one example of the screen indication.
Fig. 9 is a view illustrating one example of the screen indication.

### MODE FOR CARRYING OUT THE DISCLOSURE

Hereinafter, one embodiment of the present disclosure is described with reference to the drawings.

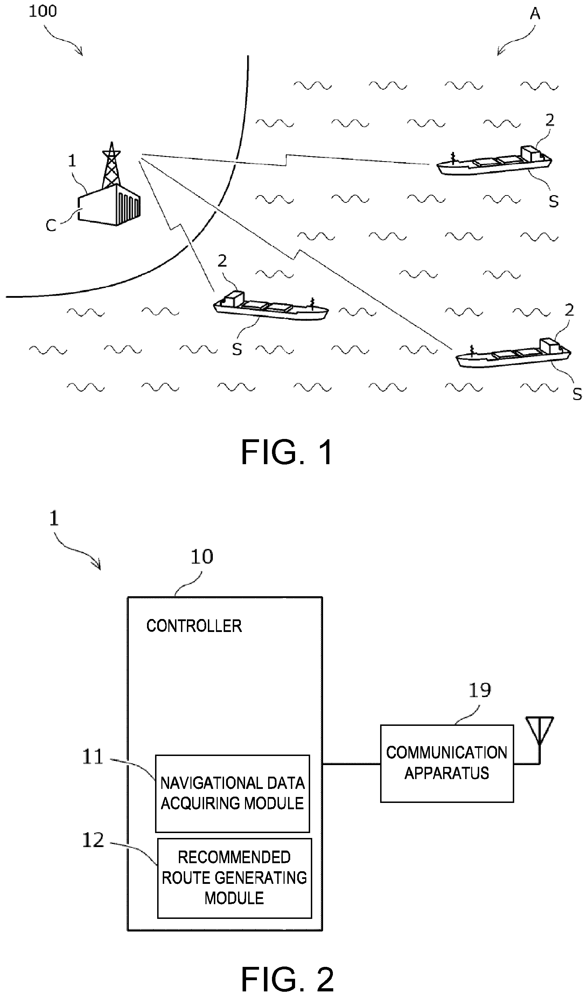

Fig. 1 is a view illustrating one example of a ship navigation support system 100. This drawing illustrates a control C on land, and a plurality of ships S which travel in a control area A. The control C is a seaborne traffic center or a port radio station, for example.

The ship navigation support system 100 includes a recommended route providing device 1 (hereinafter, referred to as "the providing device 1") provided to the control C, and a plurality of ship navigation support devices 2 (hereinafter, referred to as "the support device(s) 2") provided to the plurality of ships S, respectively.

Fig. 2 is a block diagram illustrating one example of a configuration of the providing device 1. The providing device 1 includes a controller 10 and a communication apparatus 19. The controller 10 is a computer, such as a server computer, for example.

In detail, the controller 10 is a computer including a CPU, a RAM, a ROM, a nonvolatile memory, and an input/output interface. The CPU of the controller 10 performs information processing according to a program loaded to the RAM from the ROM or the nonvolatile memory.

For example, the program may be supplied via an information storage medium, such as an optical disc or a memory card, or may be supplied via a communication network, such as the Internet or a LAN.

The controller 10 includes a navigational data acquiring module 11 and a recommended route generating module 12. These functional parts are realized by the CPU of the controller 10 performing the information processing according to the program.

The navigational data acquiring module 11 acquires ship navigational data from each ship S via the communication apparatus 19. The ship navigational data is AIS data transmitted from the ship S, for example.

The recommended route generating module 12 generates recommended route data for each ship S based on the ship navigational data acquired from the ship S.

The communication apparatus 19 includes various radio equipment which realized communications with the ships S, such as radio equipment for the ultrashort-wave band, the intermediate-wave band, and the shortwave band, for example.

The recommended route data generated by the recommended route generating module 12 is provided to the ship S via the communication apparatus 19. The recommended route data is contained in the AIS data transmitted from the control C, for example.

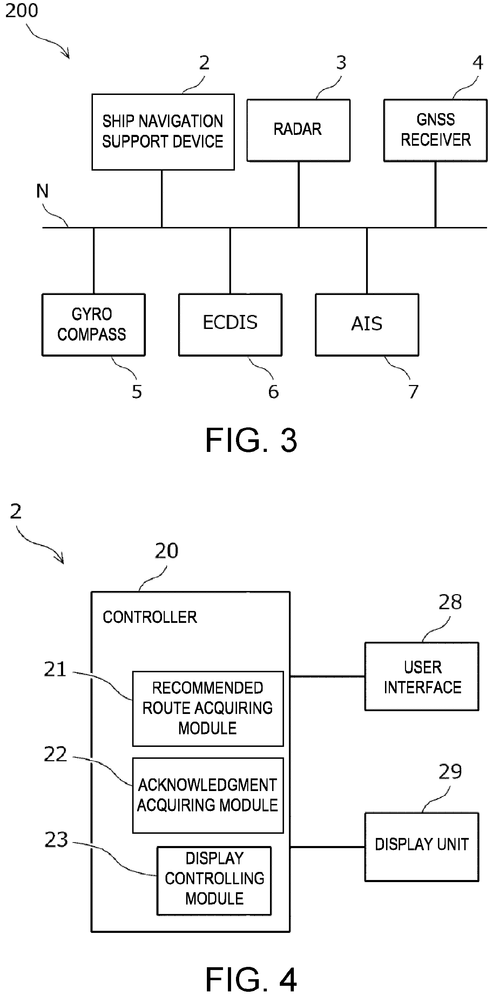

Fig. 3 is a block diagram illustrating one example of a configuration of a ship ICT system 200 mounted on the ship S. The support device 2 is included in the ship ICT system 200.

The ship ICT system 200 includes, in addition to the support device 2, a radar 3, a GNSS receiver 4, a gyrocompass 5, an ECDIS 6, and an AIS 7, for example. These apparatuses are connected to a network N, such as a LAN (Local Area Network), for example, and network communications are possible therebetween.

The radar 3 detects a target which exists around the ship, and generates target tracking data (TT data) indicative of a position and a velocity vector of the target.

The GNSS receiver 4 detects the position of the ship based on a radio wave received from a GNSS (Global Navigation Satellite System), and generates positional data indicative of the position of the ship.

The gyrocompass 5 detects the heading of the ship, and generates directional data indicative of the heading. It is not limited to the gyrocompass, but may be a GPS compass or a magnetic compass.

The ECDIS (Electronic Chart Display and Information System) 6 acquires the positional data of the ship from the GNSS receiver 4, and displays the position of the ship on an electronic nautical chart. Further, the ECDIS 6 also displays a schedule route which is set so as to sequentially follow a plurality of waypoints on the electronic nautical chart. Instead of the ECDIS 6, a GNSS plotter having a similar function may be used.

In this example, although the support device 2 and the ECDIS 6 are provided as discrete devices, they are not limited to this configuration, and the support device 2 and the ECDIS 6 may be provided as an integrated device. That is, the function of the support device 2 may be incorporated into the ECDIS 6.

The AIS (Automatic Identification System) 7 transmits AIS data to the surrounding ships S and the control C on land, and receives AIS data from the surrounding ships S and the control C on land. It is not limited to this configuration, but a VDES (VHF Data Exchange System) may be used.

The AIS data transmitted from the ship S contains data, such as an identification signal, the ship's name, the position, the course, the travelling speed, and the destination, for example. The AIS data transmitted from the control C contains data, such as control information.

Fig. 4 is a block diagram illustrating one example of a configuration of the support device 2. The support device 2 includes a controller 20, a user interface 28, and a display unit 29.

The controller 20 is a computer similar to the controller 10 of the providing device 1 described above. The controller 20 includes a recommended route acquiring module 21, an acknowledgment acquiring module 22, and a display controlling module 23. These functional parts are realized by the CPU of the controller 20 performing information processing according to a program.

The user interface 28 is a pointing device, such as a touch panel or a trackball, for example. The display unit 29 is a display device, such as a liquid crystal display or an organic electroluminescence display, for example.

The recommended route acquiring module 21 acquires recommended route data from the control C via the AIS 7. The recommended route acquiring module 21 acquires not only recommended route data for the ship, but also recommended route data for other ships.

The acknowledgment acquiring module 22 acquires acknowledgment data (a so-called "ACK data") transmitted from another ship. The acknowledgment data is data indicating that a recommended route based on the recommended route data for another ship is approved by a crew of the another ship.

The display controlling module 23 displays the recommended route based on the recommended route data acquired from the control C on the electronic nautical chart displayed on the display unit 29.

In detail, the display controlling module 23 displays not only the recommended route for the ship, but also the recommended routes for other ships. Further, the display controlling module 23 displays the recommended route for another ship discriminably whether it is before the acquisition of the acknowledgment data or after the acquisition of the acknowledgment data (described later in detail).

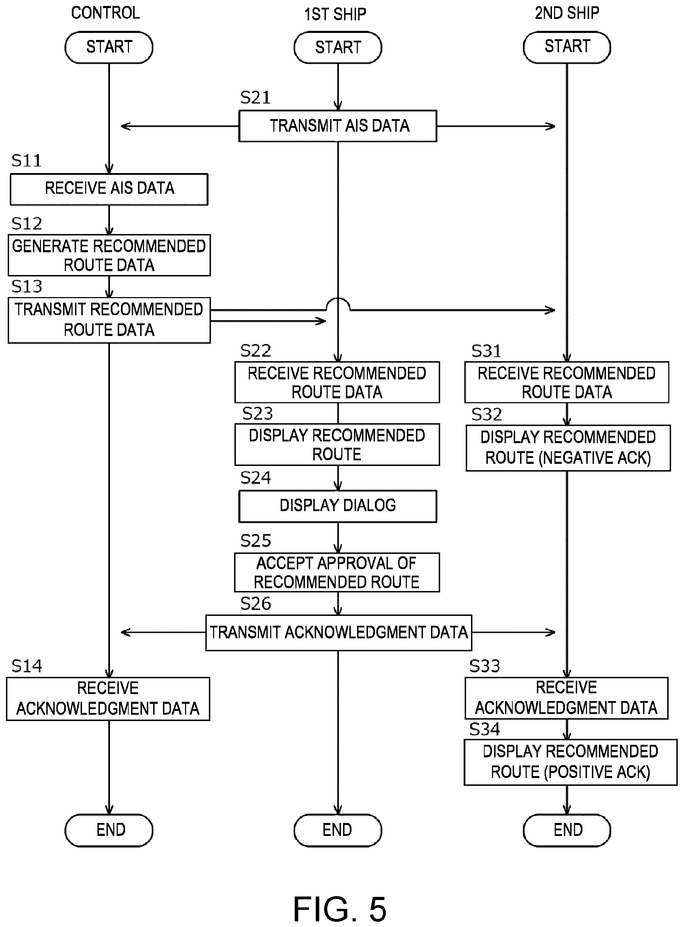

Below, concrete operations of the providing device 1 provided to the control C and the support devices 2 provided to the plurality of ships S are described. Fig. 5 is a flowchart illustrating one example of a procedure of a ship navigation support method according to this embodiment, which is realized by the providing device 1 and the plurality of support devices 2.

The providing device 1 of the control C performs processing of S11-S14 illustrated in this drawing. The support device 2 of the ship S performs processing of S21-S26 or processing of S31-S34 illustrated in this drawing.

First, the support device 2 of the ship S transmits the AIS data (S21), and the providing device 1 of the control C receives the AIS data transmitted from the ship S (S11; processing as the navigational data acquiring module 11).

Next, the providing device 1 of the control C generates the recommended route data based on the AIS data transmitted from the ship S (S12; processing as the recommended route generating module 12). In detail, the providing device 1 of the control C acquires the AIS data from all the ships S which are located in and around the control area A, and calculates the recommended route for each ship S.

For example, the providing device 1 identifies the schedule route of each ship S based on the AIS data. Then, as for the schedule route without any possibility of a collision, it is adopted as the recommended route as it is, and as for the schedule route with the possibility of a collision, a recommended route including an evasive action is calculated. The computational algorithm of the recommended route is not limited in particular.

The schedule route of the ship S is estimated based on the data contained in the AIS data, such as the position, the course, the travelling speed, and the destination, for example. Alternatively, data of the schedule route displayed on the ECDIS 6 (see Fig. 3) may be included in the AIS data, and this data may be used.

The recommended route data also includes data of a recommended travelling speed associated with the recommended route. The data of the recommended travelling speed may be a numerical value of a concrete travelling speed, or may indicate a relative travelling speed, such as acceleration or deceleration, for example. Further, the recommended route data also includes data for identifying the ship S which is a target of the recommended route.

Next, the providing device 1 of the control C transmits the generated recommended route data (S13). The recommended route data is included in the AIS data and is transmitted. Therefore, the recommended route data is received by all the ships S which are located in and around the control area A. That is, the recommended route data is received not only by the ship S that is a target of the recommended route (hereinafter, referred to as "the first ship"), but also by other ships S (hereinafter, referred to as "the second ship(s)").

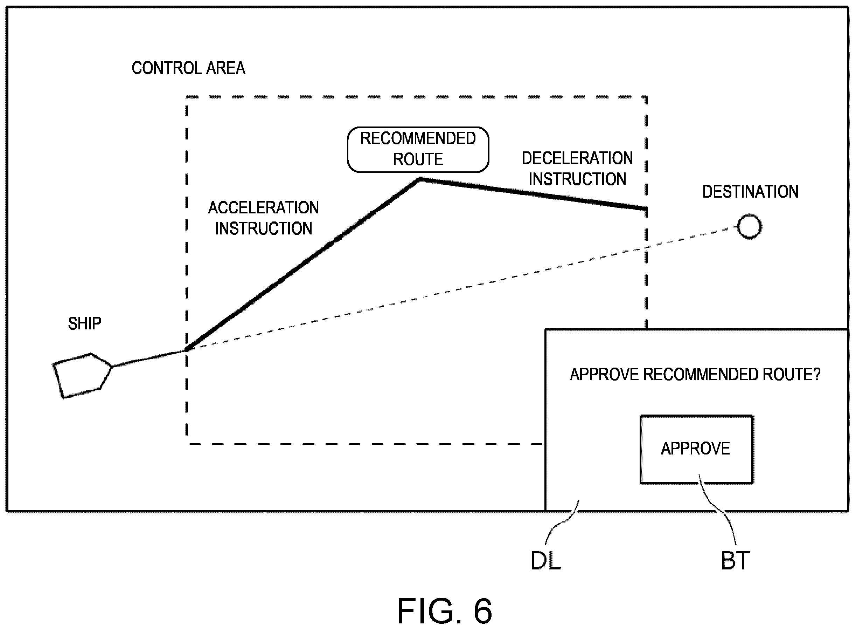

When the support device 2 of the first ship receives the recommended route data for this ship from the control C (S22; processing as the recommended route acquiring module 21), it displays the recommended route for this ship based on the received recommended route data (S23; processing as the display controlling module 23). As illustrated in Fig. 6, on the electronic nautical chart displayed on the display unit 29 of the first ship, the recommended route for this ship is displayed. The recommended route is associated with the recommended travelling speed, such as acceleration or deceleration, for every section.

Further, the support device 2 of the first ship displays a dialog box DL for asking a crew of this ship about whether the displayed recommended route for this ship is to be approved (S24), and in response to a button BT for accepting the approval, it accepts the approval of the recommended route by the crew of this ship (S25). The crew is a navigation officer, an engineer, or a radio officer, for example.

When accepted the approval of the recommended route, the support device 2 of the first ship transmits the acknowledgment data indicating that the crew of this ship has approved the recommended route for this ship (S26). The acknowledgment data is included in the AIS data and is transmitted. Therefore, the acknowledgment data is received not only by the control C, but also by the second ships which are located around this ship.

When the support device 2 of the second ship receives the recommended route data for the first ship from the control C (S31; processing as the recommended route acquiring module 21), it displays the recommended route for the first ship based on the received recommended route data in a mode indicating that the recommended route has not been approved (that is, before the acquisition of the acknowledgment data) (S32; processing as the display controlling module 23).

Then, when the support device 2 of the second ship S receives the acknowledgment data from the first ship (S33; processing as the acknowledgment acquiring module 22), it changes the display mode so that it indicates that the recommended route for the first ship has been approved (that is, after the acquisition of the acknowledgment data) and displays it (S34; processing as the display controlling module 23).

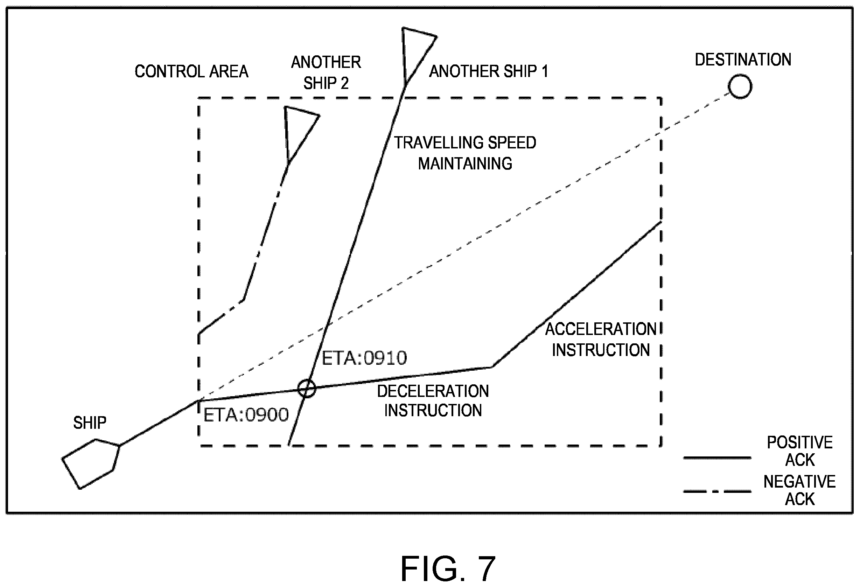

In detail, as illustrated in Fig. 7, on the electronic nautical chart displayed on the display unit 29 of the second ship, the recommended route for other ships (first ship) are displayed, together with the recommended route for this ship (second ship).

The recommended route for another ship is displayed discriminably in mutually different modes before the acquisition of the acknowledgment data (negative ACK) and after the acquisition the acknowledgment data (positive ACK). In the example of the drawing, "before the acquisition of the acknowledgment data (negative ACK)" is displayed by a one-dot chain line, and "after the acquisition of the acknowledgment data (positive ACK)" is displayed by a solid line.

Further, when the recommended route for this ship and the recommended route for another ship intersect with each other, an ETA (Estimated Time of Arrival) for this ship arriving at the intersecting position may be displayed. The ETA is calculated by the providing device 1 and is included in the recommended route data.

Further, the recommended routes for this ship and for other ships may be associated with the acceleration, the deceleration, or the recommended travelling speed for maintaining the travelling speed and displayed. Moreover, the recommended routes for this ship and for other ships may be differentiated in color according to the recommended travelling speed and displayed.

According to the embodiment described above, since the recommended route of other ships are displayed so as to be discriminable before and after the acquisition of the acknowledgment data, it becomes easier to grasp the movement of other ships. That is, since each ship S which enters into the control area A is capable of grasping the movements of other ships as common understandings, it becomes easier to suppress the occurrence of a collision.

Particularly, in the case of ships, not all the ships have similar equipment, and it is difficult to determine whether other ships located around a ship follow instructions of the control. However, by sharing the recommended route data and the acknowledgment data like this embodiment, it becomes easier to distinguish between ships following the instructions of the control and ships not following.

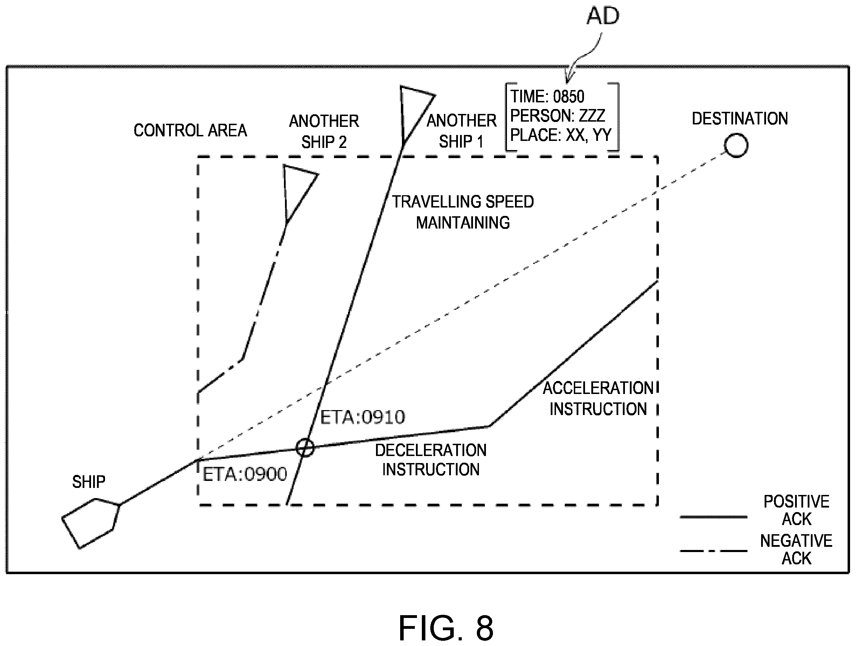

Note that, as illustrated in Fig. 8, the recommended routes for other ships after the acquisition of the acknowledgment data (positive ACK) may be displayed, together with subordinate information regarding the approval ("AD" in this drawing). The subordinate information regarding the approval is a time point, the crew, the position, etc. at/by which the recommended route is approved, for example, and the information is included in the acknowledgment data when it is transmitted.

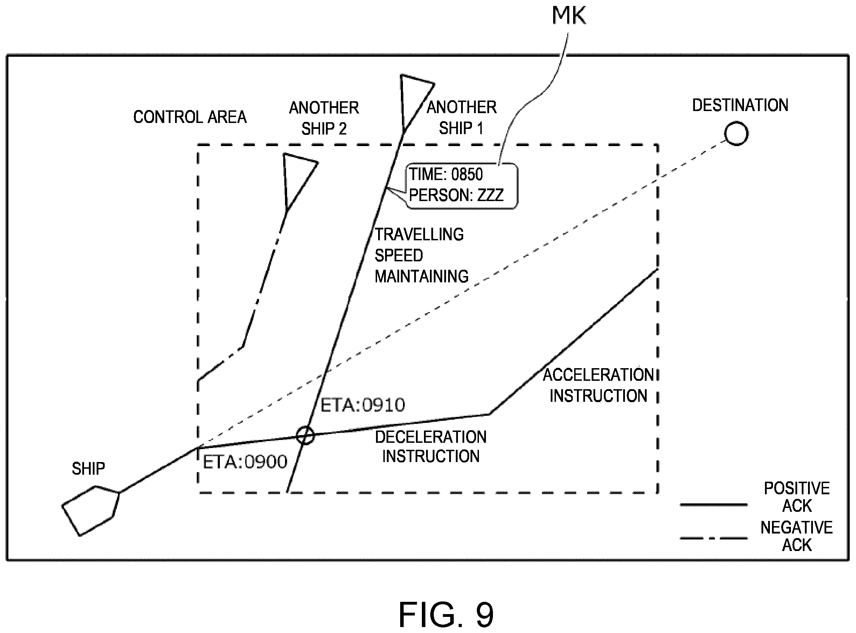

Further, as illustrated in Fig. 9, the reference character (symbol) "MK" indicating that the recommended route for another ship has been approved may be displayed at the position where this recommended route is approved. Further, the symbol MK may include subordinate information regarding the time point, the crew, etc. at/by which the recommended route is approved, for example.

Although the embodiment of the present disclosures is described, the present disclosure is not limited to the above embodiment, and it is needless to say that various modifications are possible for the person skilled in the art.

Although in the above embodiment the providing device 1 is provided to the control C on land, it is not limited to this configuration, but the providing device 1 may be provided to a patrol ship which cruises in the control area A, for example.

Further, by distributing the recommended route data and the acknowledgment data through the Internet etc., it may be configured so that a small ship without the AIS can grasp the movement of a large ship.

Further, it may be configured to notify a logistics system on land when a significant delay occurs as a result of travelling on the recommended route including the evasive action.

### DESCRIPTION OF REFERENCE CHARACTERS

- 1: Recommended Route Providing Device
- 10: Controller
- 11: Navigational Data Acquiring Module
- 12: Recommended Route Generating Module
- 19: Communication Apparatus
- 2: Ship Navigation Support Device
- 20: Controller
- 21: Recommended Route Acquiring Module
- 22: Acknowledgment Acquiring Module
- 23: Display Controlling Module
- 28: User Interface
- 29: Display Unit
- 3: Radar
- 4: GNSS Receiver
- 5: Gyrocompass
- 6: ECDIS
- 7: AIS
- 100: Ship Navigation Support System
- 200: Ship ICT System
- C: Control
- S: Ship
- A: Control Area

## Claims

1. A ship navigation support device (2), comprising:
a recommended route acquiring module (21) that acquires recommended route data for another ship;
an acknowledgment acquiring module (22) that acquires acknowledgment data indicating that a recommended route based on the recommended route data for the other ship has been approved; and
a display unit (29) that displays the recommended route based on the recommended route data for the other ship so as to be discriminable before and after the acquisition of the acknowledgment data.

2. A ship navigation support system, comprising:
a recommended route providing device (1) that transmits recommended route data for a first ship;
a first ship navigation support device that is mounted on the first ship and transmits acknowledgment data indicating that a recommended route based on the recommended route data for the first ship has been approved; and
a second ship navigation support device (2) according to claim 1 , that is mounted on a second ship, wherein:
the recommended route acquiring module (21) of the second ship navigation support device (2) acquires the recommended route data for the first ship;
and
the display unit (29) of the second ship navigation support device (2) displays the recommended route based on the recommended route data for the first ship.

3. The ship navigation support system of claim 2, wherein the recommended route data for the first ship includes data of a recommended travelling speed associated with the recommended route, and
wherein the display unit (29) displays the recommended route based on the recommended route data for the first ship, together with the recommended travelling speed.

4. The ship navigation support system of claim 2 or 3, wherein the acknowledgment data includes data of a time point at which the recommended route is approved, and
wherein the display unit (29) displays the time point at which the recommended route is approved.

5. The ship navigation support system of any one of claims 2 to 4, wherein the acknowledgment data includes data of a person who approves the recommended route, and
wherein the display unit (29) displays the person who approves the recommended route.

6. The ship navigation support system of any one of claims 2 to 5, wherein the acknowledgment data includes data of a position at which the recommended route is approved, and
wherein the display unit (29) displays the position at which the recommended route is approved.

7. The ship navigation support system of any one of claims 2 to 6, wherein the acknowledgment data includes data of a position at which the recommended route is approved, and
wherein the display unit (29) displays a symbol indicating that the recommended route has been approved so as to be associated with the position at which the recommended route is approved.

8. The ship navigation support system of any one of claims 2 to 7, wherein the recommended route providing device further includes:
a navigational data acquiring module (11) that acquires ship navigational data from the first ship; and
a recommended route generating module (12) that generates the recommended route data for the first ship based on the ship navigational data.

9. The ship navigation support system of any one of claims 2 to 8, wherein the recommended route acquiring module (21) further acquires recommended route data for the second ship, and
wherein the display unit (29) further displays recommended route based on the recommended route data for the second ship.

10. The ship navigation support system of claim 9, wherein the display unit (29) displays a time until the ships reach a position where the recommended route based on the recommended route data for the first ship and the recommended route based on the recommended route data for the second ship intersect with each other.

11. A ship navigation support method, comprising the steps of:
transmitting, from a recommended route providing device (1), recommended route data for a first ship;
transmitting, from a first ship navigation support device mounted on the first ship, acknowledgment data indicating that a recommended route based on the recommended route data for the first ship has been approved;
at a second ship navigation support device (2) mounted on a second ship,
acquiring the recommended route data for the first ship;
acquiring the acknowledgment data; and
displaying the recommended route based on the recommended route data for the first ship so as to be discriminable before and after the acquisition of the acknowledgment data.

12. A program for causing a computer to function as:
a recommended route acquiring module (21) that acquires recommended route data for another ship;
an acknowledgment acquiring module (22) that acquires acknowledgment data indicating that a recommended route based on the recommended route data for the another ship has been approved; and
a display controlling module (23) that displays the recommended route based on the recommended route data for the another ship so as to be discriminable before and after the acquisition of the acknowledgment data.

## Patentansprüche

1. Schiffsnavigationsunterstützungsvorrichtung (2), aufweisend:
ein Modul (21) zum Erfassen einer empfohlenen Route, das empfohlene Routendaten für ein anderes Schiff erfasst;
ein Modul (22) zum Erfassen einer Bestätigung, das Bestätigungsdaten erfasst, die angeben, dass eine empfohlene Route basierend auf den empfohlenen Routendaten für das andere Schiff genehmigt wurde; und
eine Anzeigeeinheit (29), die die empfohlene Route basierend auf den empfohlenen Routendaten für das andere Schiff so anzeigt, dass sie vor und nach der Erfassung der Bestätigungsdaten unterscheidbar ist.

2. Schiffsnavigationsunterstützungssystem, aufweisend:
eine Vorrichtung (1) zum Bereitstellen einer empfohlenen Route, die empfohlene Routendaten für ein erstes Schiff überträgt;
eine erste Schiffsnavigationsunterstützungsvorrichtung, die an dem ersten Schiff montiert ist und Bestätigungsdaten überträgt, die angeben, dass eine empfohlene Route basierend auf den empfohlenen Routendaten für das erste Schiff genehmigt wurde; und
eine zweite Schiffsnavigationsunterstützungsvorrichtung (2) nach Anspruch 1, die an einem zweiten Schiff montiert ist, wobei:
das Modul (21) zum Erfassen einer empfohlenen Route der zweiten Schiffsnavigationsunterstützungsvorrichtung (2) die empfohlenen Routendaten für das erste Schiff erfasst;
und
die Anzeigeeinheit (29) der zweiten Schiffsnavigationsunterstützungsvorrichtung (2) die empfohlene Route basierend auf den empfohlenen Routendaten für das erste Schiff anzeigt.

3. Schiffsnavigationsunterstützungssystem nach Anspruch 2, wobei die empfohlenen Routendaten für das erste Schiff Daten einer empfohlenen Fahrgeschwindigkeit enthalten, die der empfohlenen Route zugeordnet sind, und
wobei die Anzeigeeinheit (29) die empfohlene Route basierend auf den empfohlenen Routendaten für das erste Schiff zusammen mit der empfohlenen Fahrgeschwindigkeit anzeigt.

4. Schiffsnavigationsunterstützungssystem nach Anspruch 2 oder 3, wobei die Bestätigungsdaten Daten eines Zeitpunkts enthalten, zu dem die empfohlene Route genehmigt wird, und
wobei die Anzeigeeinheit (29) den Zeitpunkt anzeigt, zu dem die empfohlene Route genehmigt wird.

5. Schiffsnavigationsunterstützungssystem nach einem der Ansprüche 2 bis 4, wobei die Bestätigungsdaten Daten einer Person enthalten, die die empfohlene Route genehmigt, und
wobei die Anzeigeeinheit (29) die Person anzeigt, die die empfohlene Route genehmigt.

6. Schiffsnavigationsunterstützungssystem nach einem der Ansprüche 2 bis 5, wobei die Bestätigungsdaten Daten einer Position enthalten, an der die empfohlene Route genehmigt wird, und
wobei die Anzeigeeinheit (29) die Position anzeigt, an der die empfohlene Route genehmigt wird.

7. Schiffsnavigationsunterstützungssystem nach einem der Ansprüche 2 bis 6, wobei die Bestätigungsdaten Daten einer Position enthalten, an der die empfohlene Route genehmigt wird, und
wobei die Anzeigeeinheit (29) ein Symbol anzeigt, das angibt, dass die empfohlene Route genehmigt wurde, um mit der Position verknüpft zu sein, an der die empfohlene Route genehmigt wird.

8. Schiffsnavigationsunterstützungssystem nach einem der Ansprüche 2 bis 7, wobei die Vorrichtung zum Bereitstellen einer empfohlenen Route ferner enthält:
ein Modul (11) zum Erfassen von Navigationsdaten, das Schiffsnavigationsdaten von dem ersten Schiff erfasst; und
ein Modul (12) zum Erzeugen einer empfohlenen Route, das die empfohlenen Routendaten für das erste Schiff basierend auf den Schiffsnavigationsdaten erzeugt.

9. Schiffsnavigationsunterstützungssystem nach einem der Ansprüche 2 bis 8, wobei das Modul (21) zum Erfassen einer empfohlenen Route ferner empfohlene Routendaten für das zweite Schiff erfasst, und
wobei die Anzeigeeinheit (29) ferner eine empfohlene Route basierend auf den empfohlenen Routendaten für das zweite Schiff anzeigt.

10. Schiffsnavigationsunterstützungssystem nach Anspruch 9, wobei die Anzeigeeinheit (29) eine Zeit anzeigt, bis die Schiffe eine Position erreichen, an der sich die empfohlene Route basierend auf den empfohlenen Routendaten für das erste Schiff und die empfohlene Route basierend auf den empfohlenen Routendaten für das zweite Schiff schneiden.

11. Schiffsnavigationsunterstützungsverfahren, aufweisend die Schritte:
Übertragen von empfohlenen Routendaten für ein erstes Schiff von einer Vorrichtung (1) zum Bereitstellen einer empfohlenen Route;
Übertragen von Bestätigungsdaten, die angeben, dass eine empfohlene Route basierend auf den empfohlenen Routendaten für das erste Schiff genehmigt wurde, von einer ersten Schiffsnavigationsunterstützungsvorrichtung, die an dem ersten Schiff montiert ist;
an einer zweiten Schiffsnavigationsunterstützungsvorrichtung (2), die an einem zweiten Schiff montiert ist,
Erfassen der empfohlenen Routendaten für das erste Schiff;
Erfassen der Bestätigungsdaten; und
Anzeigen der empfohlenen Route basierend auf den empfohlenen Routendaten für das erste Schiff, so dass sie vor und nach der Erfassung der Bestätigungsdaten unterscheidbar ist.

12. Programm zum Bewirken, dass ein Computer funktioniert als:
ein Modul (21) zum Erfassen einer empfohlenen Route, das empfohlene Routendaten für ein anderes Schiff erfasst;
ein Modul (22) zum Erfassen einer Bestätigung, das Bestätigungsdaten erfasst, die angeben, dass eine empfohlene Route basierend auf den empfohlenen Routendaten für das andere Schiff genehmigt wurde; und
ein Anzeigesteuermodul (23), das die empfohlene Route basierend auf den empfohlenen Routendaten für das andere Schiff so anzeigt, dass sie vor und nach der Erfassung der Bestätigungsdaten unterscheidbar ist.

## Revendications

1. Dispositif d'aide à la navigation pour navire (2), comprenant :
un module d'acquisition d'itinéraire recommandé (21) qui acquiert des données d'itinéraire recommandé pour un autre navire ;
un module d'acquisition de confirmation (22) qui acquiert des données de confirmation indiquant qu'un itinéraire recommandé basé sur les données d'itinéraire recommandé pour l'autre navire a été approuvé ; et
une unité d'affichage (29) qui affiche l'itinéraire recommandé basé sur les données d'itinéraire recommandé pour l'autre navire afin qu'il soit discriminable avant et après l'acquisition des données de confirmation.

2. Système d'aide à la navigation pour navire, comprenant :
un dispositif de fourniture d'itinéraire recommandé (1) qui transmet des données d'itinéraire recommandé pour un premier navire ;
un premier dispositif d'aide à la navigation pour navire qui est monté sur le premier navire et transmet des données de confirmation indiquant qu'un itinéraire recommandé basé sur les données d'itinéraire recommandé pour le premier navire a été approuvé ; et
un second dispositif d'aide à la navigation pour navire (2) selon la revendication 1, qui est monté sur un second navire,
dans lequel :
le module d'acquisition d'itinéraire recommandé (21) du second dispositif d'aide à la navigation pour navire (2) acquiert les données d'itinéraire recommandé pour le premier navire ; et
l'unité d'affichage (29) du second dispositif d'aide à la navigation pour navire (2) affiche l'itinéraire recommandé basé sur les données d'itinéraire recommandé pour le premier navire.

3. Système d'aide à la navigation pour navire selon la revendication 2, dans lequel les données d'itinéraire recommandé pour le premier navire incluent des données d'une vitesse de déplacement recommandée associée à l'itinéraire recommandé, et
dans lequel l'unité d'affichage (29) affiche l'itinéraire recommandé basé sur les données d'itinéraire recommandé pour le premier navire, ainsi que la vitesse de déplacement recommandée.

4. Système d'aide à la navigation pour navire selon la revendication 2 ou 3, dans lequel les données de confirmation incluent des données d'un moment auquel l'itinéraire recommandé est approuvé, et
dans lequel l'unité d'affichage (29) affiche le moment auquel l'itinéraire recommandé est approuvé.

5. Système d'aide à la navigation pour navire selon l'une des revendications 2 à 4, dans lequel les données de confirmation incluent des données d'une personne qui approuve l'itinéraire recommandé, et
dans lequel l'unité d'affichage (29) affiche la personne qui approuve l'itinéraire recommandé.

6. Système d'aide à la navigation pour navire selon l'une des revendications 2 à 5, dans lequel les données de confirmation incluent des données d'une position dans laquelle l'itinéraire recommandé est approuvé, et
dans lequel l'unité d'affichage (29) affiche la position à laquelle l'itinéraire recommandé est approuvé.

7. Système d'aide à la navigation pour navire selon l'une des revendications 2 à 6, dans lequel les données de confirmation incluent des données d'une position à laquelle l'itinéraire recommandé est approuvé, et
dans lequel l'unité d'affichage (29) affiche un symbole indiquant que l'itinéraire recommandé a été approuvé afin qu'il soit associé à la position à laquelle l'itinéraire recommandé est approuvé.

8. Système d'aide à la navigation pour navire selon l'une des revendications 2 à 7, dans lequel le dispositif de fourniture d'itinéraire recommandé inclut en outre :
un module d'acquisition de données de navigation (11) qui acquiert des données de navigation de navire à partir du premier navire ; et
un module de génération d'itinéraire recommandé (12) qui génère les données d'itinéraire recommandé pour le premier navire sur la base des données de navigation de navire.

9. Système d'aide à la navigation pour navire selon l'une des revendications 2 à 8, dans lequel le module d'acquisition d'itinéraire recommandé (21) acquiert en outre des données d'itinéraire recommandé pour le second navire, et
dans lequel l'unité d'affichage (29) affiche en outre l'itinéraire recommandé basé sur les données d'itinéraire recommandé pour le second navire.

10. Système d'aide à la navigation pour navire selon la revendication 9, dans lequel l'unité d'affichage (29) affiche un temps jusqu'à ce que les navires atteignent une position où l'itinéraire recommandé basé sur les données d'itinéraire recommandé pour le premier navire et l'itinéraire recommandé basé sur les données d'itinéraire recommandé pour le second navire se croisent.

11. Procédé d'aide à la navigation pour navire, comprenant les étapes :
de transmission, à partir d'un dispositif de fourniture d'itinéraire recommandé (1), de données d'itinéraire recommandé pour un premier navire ;
de transmission, à partir d'un premier dispositif d'aide à la navigation pour navire monté sur le premier navire, de données de confirmation indiquant qu'un itinéraire recommandé basé sur les données d'itinéraire recommandé pour le premier navire a été approuvé ;
au niveau d'un second dispositif d'aide à la navigation pour navire (2) monté sur un second navire, d'acquisition des données d'itinéraire recommandé pour le premier navire ;
d'acquisition des données de confirmation ; et
d'affichage de l'itinéraire recommandé basé sur les données d'itinéraire recommandé pour le premier navire afin qu'il soit discriminable avant et après l'acquisition des données de confirmation.

12. Programme permettant à un ordinateur de fonctionner comme :
un module d'acquisition d'itinéraire recommandé (21) qui acquiert des données d'itinéraire recommandé pour un autre navire ;
un module d'acquisition de confirmation (22) qui acquiert des données de confirmation indiquant qu'un itinéraire recommandé basé sur les données d'itinéraire recommandé pour l'autre navire a été approuvé ; et
un module de commande d'affichage (23) qui affiche l'itinéraire recommandé basé sur les données d'itinéraire recommandé pour l'autre navire afin qu'il soit discriminable avant et après l'acquisition des données de confirmation.
